# EUROPÄISCHE PATENTSCHRIFT

(11) **EP 1 292 645 B1**
(45) Veröffentlichungstag und Bekanntmachung des Hinweises auf die Patenterteilung: **28.12.2005**
(21) Anmeldenummer: 01933447.3
(22) Anmeldetag: 09.05.2001
(51) Int. Cl.: C09C 1/30, C01B 33/18

(54) **VERFAHREN ZUR VERRINGERUNG DER OBERFLÄCHE VON SILIZIUMDIOXID**
METHOD FOR REDUCING THE SURFACE OF SILICON DIOXIDE
PROCEDE POUR REDUIRE LA SURFACE DU DIOXYDE DE SILICIUM

(30) Priorität: 10.05.2000 AT 81802000
(43) Veröffentlichungstag der Anmeldung: 19.03.2003
(73) Patentinhaber: NUTROPIA Ernährungsmedizinische Forschungs GmbH, 5580 Unternberg (AT)
(72) Erfinder: KAZNACHEEV, Vlail Petrovic, Novosibirsk 630090 (RU); TROFIMOV, Aleksander, Novosibirsk, 630117 (RU); BREN, Eugen, A-5571 Mariapfarr (AT); EHRENBERGER, Michael, Mogersdorf 159 (AT); RITZER, Stefan, A-5580 Tamsweg (AT); KÖSSLER, Peter, A-5571 Mariapfarr (AT); FUCHS, Norbert, A-5571 Mariapfarr (AT)
(74) Vertreter: Alge, Daniel
(86) Internationale Anmeldenummer: PCT/AT2001/000135
(87) Internationale Veröffentlichungsnummer: WO 2001/085852

(56) Entgegenhaltungen:
- WO-A-00/28113
- DD-A- 248 348

## Beschreibung

Die Erfindung betrifft ein Verfahren zur Verringerung der Oberfläche von Siliziumdioxid.

Siliziumdioxid (Kieselsäure, Silika, Silicea, Silizium dioxidatum) dient in der Arzneimittel- und Lebensmitteltechnologie als anorganischer Hydrogelbildner, als Hilfsstoff zur Tabletten- und Kapselherstellung, als Gleitmittel, als Adsorbens, als Trennmittel, als Mittel zur Erhaltung der Rieselfähigkeit und als Wirkstoffträger, ist aber in zahlreichen Heilkräutern und Lebensmitteln auch in natürlicher Form enthalten.

Obwohl Silizium und seine Verbindungen von offiziellen Ernährungsbehörden nicht als essentielle Nährstoffe anerkannt werden, wird die Essentialität des Siliziums und seiner Verbindungen für den humanen Organismus bereits seit Jahrzehnten in wissenschaftlichen Publikationen diskutiert und bejaht (vgl. W. Pfannhauser, Essentielle Spurenelemente in der Nahrung, Springer (1988), Seiten 5-10; A. Mancinella, Il silicio, un oligoelemento essenziale per gli organismi viventi, Clin. Ter. 137:343-350 (1991); K. Schwarz, B.A. Ricci, et al: Inverse Relation of silicon in drinking water and atherosclerosis in Finland, The Lancet (1977), 538-539; E.M. Carlisle, Silicon as an essential trace element in animal nutrition (1986), Silicon biochemistry, Wiley, Chichester (Ciba Foundation Symposium 121), 123-139; E.M. Carlisle, Silicon as a trace nutrient, The Science of the Total Environment, 73 (1988), 95-106).

In diesen Publikationen wird die Essentialität des Silizium als Strukturbestandteil des Bindegewebes, aber auch als essentiell im Zusammenhang mit den Funktionen des Herz/Kreislauf-Systems, des Immunsystems, des Knochenstoffwechsels, von Alterungsprozessen und als Antagonist des Aluminiums (im Zusammenhang mit Morbus Alzheimer) beschrieben.

Neben diesen biochemischen Eigenschaften dürften Silizium und seine Verbindungen jedoch elementare biophysikalische Funktionen in organischen Organismen (Pflanze, Tier, Mensch) aufweisen. Dem Element Silizium kommt aufgrund seiner Stellung im Periodensystem der Elemente (vierte Periode) die Funktion eines Halbleiters zu, die in der Anwendungstechnik (Halbleiterphysik, Laser- und Computertechnik) verbreitete Anwendung finden. Entsprechend dürfte Silizium in organischen Lebewesen auch eine Rolle im intra- und interzellulären Signal-Transfer sowie in der Speicherung und Transformation eine elementare Funktion zukommen.

Die gezielte und kontrollierte Veränderung von biophysikalischen Eigenschaften von hochdispersem Siliziumdioxid, insbesondere hinsichtlich Oberflächenstruktur oder Adsorptionseigenschaften bezüglich zu adsorbierenden Substanzen, konnte bislang im Stand der Technik nur unter Verwendung von mechanischen Beeinflussungen verändert werden. Diese mechanischen Beeinflussungen sind aber oft schwer kontrollierbar und weisen eine große Varianz sowohl was ihre lokale Treffsicherheit als auch was ihre Reproduzierbarkeit anbelangt.

Aufgabe der vorliegenden Erfindung war es daher, die supermolekulare Struktur von Siliziumdioxid und verwandten Silizium-/Sauerstoffverbindungen ohne mechanische Beeinflussung zu verändern.

Diese Aufgabe wird erfindungsgemäß gelöst durch ein Verfahren zur Verringerung der Oberfläche von Siliziumdioxid, welches dadurch gekennzeichnet ist, dass Siliziumdioxid in eine elektromagnetische Abschirmungsvorrichtung, ausgewählt aus einer Aluminium/Magnesium-Metallschirmvorrichtung und einer hypomagnetischen Kammer aus Permalloystahl, eingebracht wird und für eine Zeitdauer von mindestens 3, vorzugsweise von mindestens 6 Stunden, inkubiert wird.

Völlig überraschend konnte mit der Inkubation in einer erfindungsgemäßen elektromagnetischen Abschirmung die biophysikalischen Eigenschaften der Siliziumstruktur derart geändert werden, dass die mittlere Oberfläche des Siliziumdioxidpräparates, gemessen in einem BET-Test (Isotherm-Analyse durch Stickstoff-Adsorption bei -77°K, gemessen mit ASAP-2400 der Firma Micromeritics/USA), reduziert wird. Die elektromagnetische Abschirmungsvorrichtung soll dabei in erster Linie geeignet sein - ähnlich einem Faraday'schen Käfig -, magnetische Einflüsse abzuschirmen und die strukturelle Veränderung der biophysikalischen Eigenschaften des Siliziumdioxids aufgrund dieser Abschirmung ermöglichen. Durch die erfindungsgemäße Behandlung kann beispielsweise das Adsorptionsvermögen bzw. die Adsorptionsselektivität von Siliziumdioxid gezielt verändert werden. Dies war auch deshalb völlig überraschend, da die erfindungsgemäße Behandlung ohne jegliche mechanische Beeinflussung durchgeführt wird, dabei aber trotzdem strukturelle Veränderungen erzielt werden können.

Die erfindungsgemäße Aluminium/Magnesium-Metallschirmvorrichtung besteht aus einer Aluminium/Magnesium-Legierung, die vorzugsweise noch Silizium enthält. Bevorzugte Metallschirme enthalten 80-98 % Aluminium, vorzugsweise 90-95 %, 2-20 % Magnesium, vorzugsweise 3-7 %, und 0-2 5 Silizium, vorzugsweise 1-1,5 %. Es hat sich erfindungsgemäß auch gezeigt, dass die erfindungsgemäßen Effekte mit einer Metallschirmvorrichtung aus reinem Aluminium nicht erzielt werden können.

Die erfindungsgemäße hypomagnetische Kammer muss ebenfalls aus einem speziellen Material bestehen, so dass die erfindungsgemäßen Effekte auftreten, nämlich aus Permalloystahl bzw. aus einer Permalloy-Legierung. Unter Permalloy-Legierungen bzw. -Stählen werden im Allgemeinen magnetische Werkstoffe auf Fe-Ni-Basis mit 72 - 83 Gew.% Ni-Anteilen und vorzugsweise Mo, Cu und Cr als Zusätze verstanden. Die erfindungsgemäßen Materialien weisen vergleichsweise hohe Permeabilitäten mit Werten zwischen 30 000 und 150 000, eine geringe magnetische Verlustleistung beim Ummagnetisieren und rechteckförmige Hystereseschleifen (vgl. Lueger, Lexikon der Technik, Band 16, "Magnetische werkstoffe; insbesondere Punkt 5.1.2.2.). Dabei wird erfindungsgemäß das Endmagnetfeld durch die Kammer vorzugsweise bis auf 1/600, insbesondere auf 1/5000, abgeschwächt, wobei die Abschwächung auch abhängig von der Größe der Kammer ist.

Bevorzugte konstruktive Varianten dieser elektromagnetischen Abschirmungsvorrichtungen sind z.B. in den RU-Psen 2012175 und 2122446 beschrieben.

Besonders geeignete Vorrichtungen zur Durchführung der erfindungsgemäßen Abschirmung sind in den nachfolgenden Beispielen beschrieben.

Die Inkubationsdauer, während der das Siliziumdioxid in der erfindungsgemäßen elektromagnetischen Abschirmungsvorrichtung erfindungsgemäß verbleibt, ist in der Regel nicht kritisch. Der erfindungsgemäße Effekt ist jedoch umso stärker, je länger die Inkubationszeit ist. Diese direkte Abhängigkeit durch den erfindungsgemäßen Effekt von der Inkubationsdauer hängt zwar auch von der Effektivität der elektromagnetischen Abschirmung ab, erreicht allerdings (beispielsweise in den erfindungsgemäßen Vorrichtungen) ein Plateau bei etwa 72 Stunden. Bevorzugterweise wird daher die erfindungsgemäße Inkubation während einer Zeitdauer von 12 bis 200 Stunden, vorzugsweise während 24 bis 100 Stunden, durchgeführt, wobei sich für ein optimiertes elektromagnetisches Abschirmungssystem eine Zeitdauer von etwa 72 Stunden als Verfahrensoptimum herausgestellt hat.

Die vorliegende Erfindung betrifft ein Verfahren zur Verringerung der Oberfläche von Siliziumdioxid, dessen biophysikalische Eigenschaften ohne mechanische Beeinflussung geändert werden. Die Oberflächeneigenschaften dieses Siliciumdioxids werden gegenüber einem Ausgangspräparat ohne mechanische Beeinflussung biophysikalisch geändert.

Die Erfindung wird an Hand der nachfolgenden Beispiele, auf die sie jedoch nicht beschränkt sein soll, sowie der Zeichnungen näher erläutert.

Es zeigen:

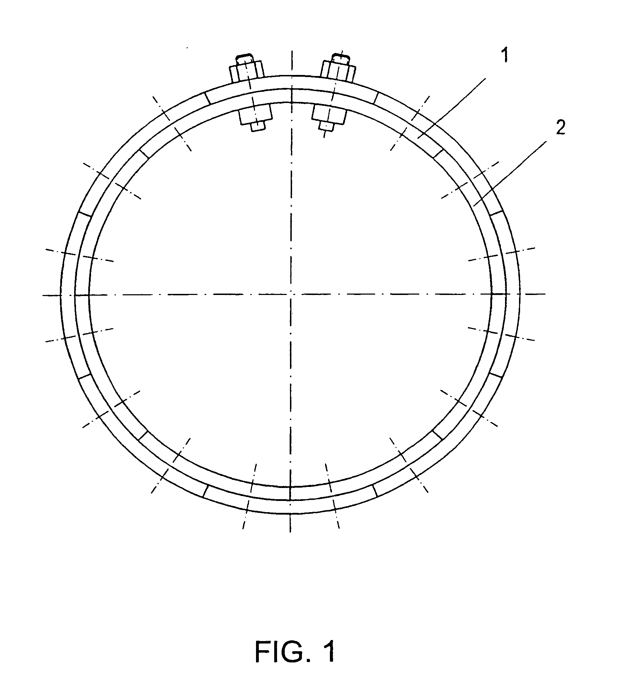

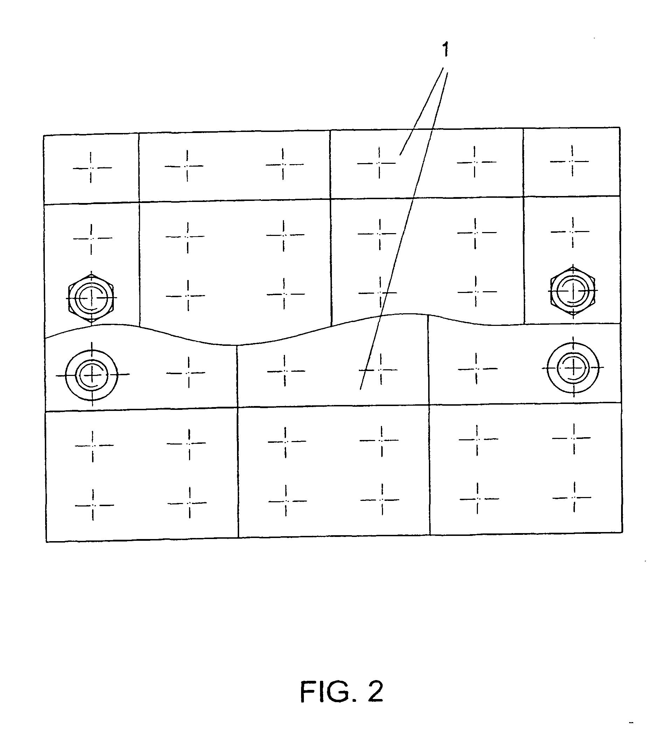

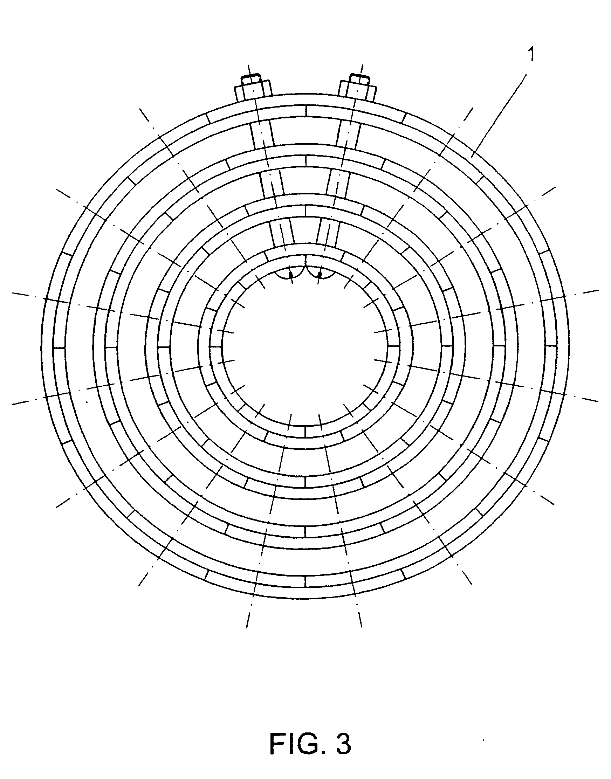

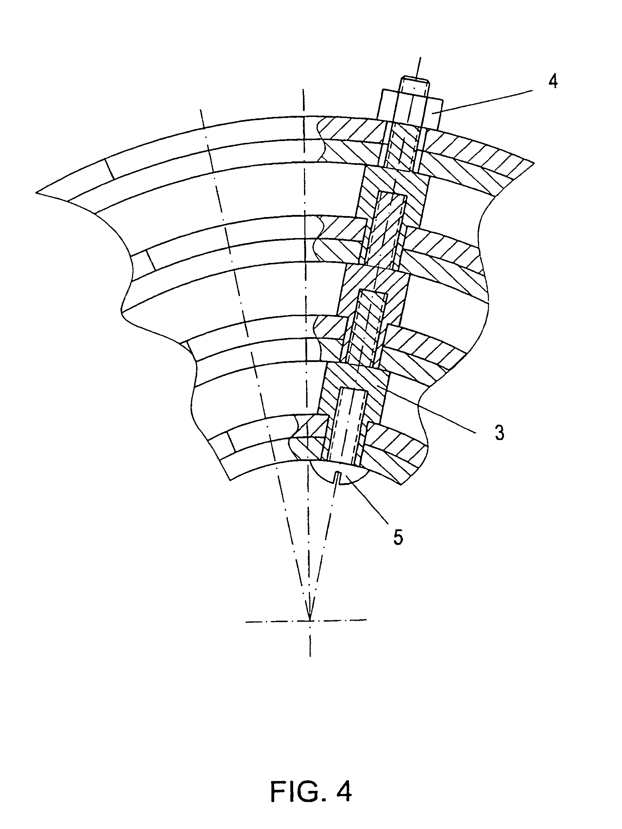

die Fig. 1 bis 4: eine hypomagnetische Kammer;
die Fig. 5 bis 8: einen erfindungsgemäßen Metallschirm.

### Beispiele:

### A) Vorrichtungen

### Vorrichtung 1 (hypomagnetische Kammer) :

Diese Vorrichtung aus Permalloystahl dient dazu, im biophysikalischen Experiment und in der biophysikalischen Anwendung Halbleiter-Elemente wie Silizium und seine Verbindungen vor magnetischen Einflüssen abzuschirmen. Die für diesen Zweck gefertigte Kammer besteht aus vier Schüsseln von ferromagnetischem Material (1, 2) mit Abstandshalter (3) und Befestigungsvorrichtung (5, 4) und dient der Abschirmung des ummantelten Raumes vor magnetischen Einflüssen aus der Umgebung. Außendurchmesser 2 m, Innendurchmesser 1,2 m, Länge 3,8 m.

Ein Versuchsmuster der Kammer mit einem Innendurchmesser von 1200 mm, einem Außendurchmesser von 2000 mm und einer Länge von 3900 mm wurde aus einem Band 79 nm, Stärke 1,5 mm, Breite 250 mm, gefertigt.

### Vorrichtung 2 (Metallschirm):

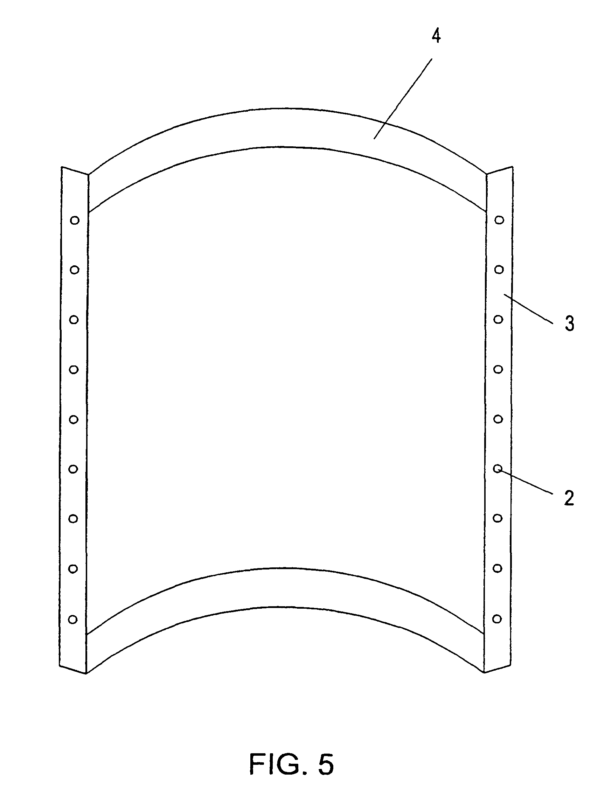

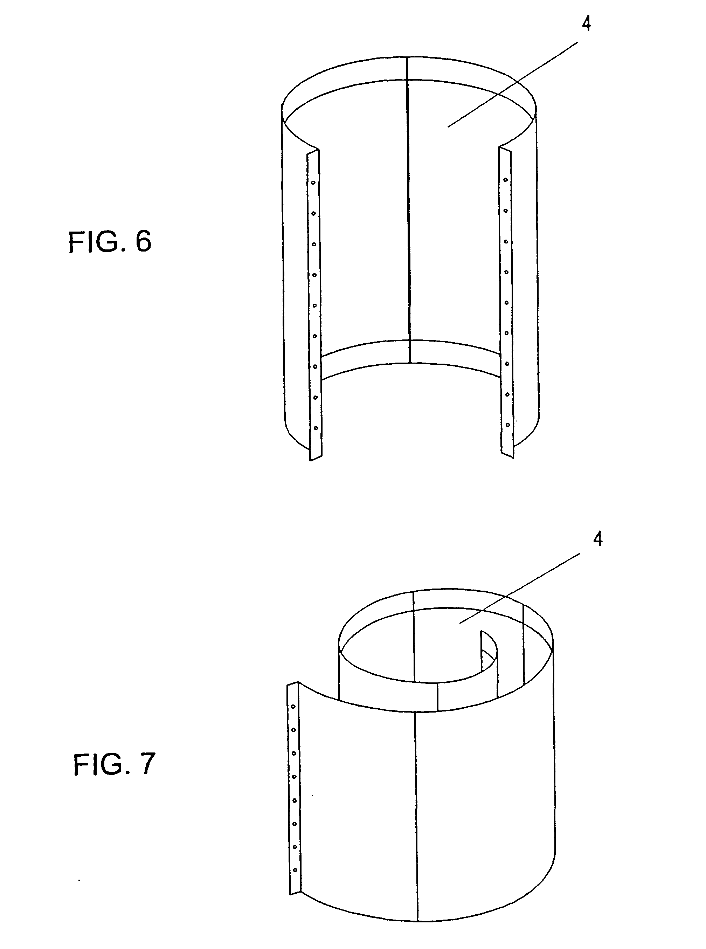

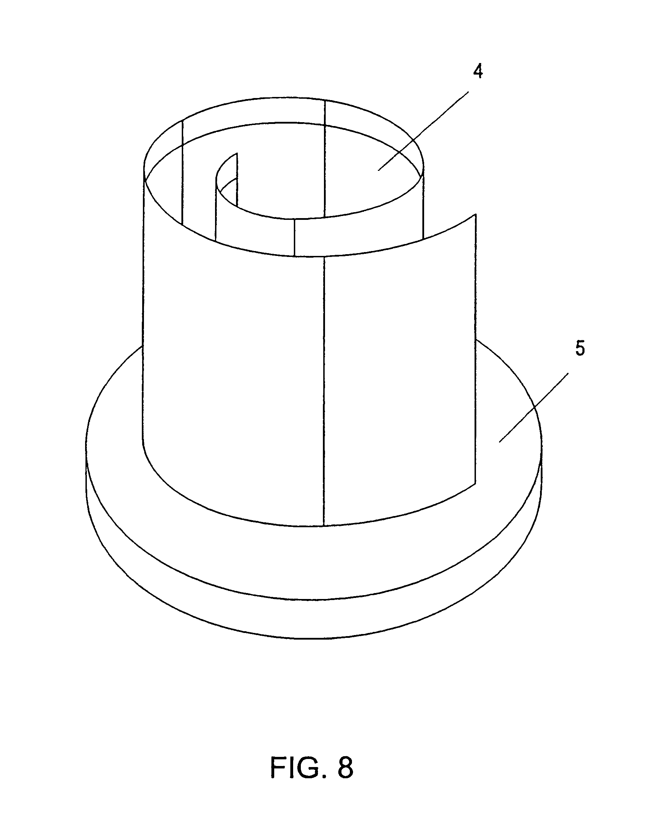

Dieser Metallschirm besteht aus einer Metallplattenkonstruktion aus einer Aluminiumlegierung (93,2 % Al, 5,4 % Mg, 1,4 % Si), Stärke 1,5 mm, Höhe bis 280 cm, Breite 129 cm, mit geschliffener Oberfläche und einer Krümmung, die dafür sorgt, dass sich der Brennpunkt im Abstand von 50 cm von der Arbeitsfläche befindet (Fig. 5). Die Platten sind so miteinander verbunden, dass eine spiralförmige Oberfläche gebildet wird. Jedes Konstruktionselement wird mit den anderen durch Stöße verbunden und mit 15 Befestigungsschrauben (2) und metallischen Befestigungswinkelplatten (3) in der Größe 5,0 x 5,0 x 280 cm, die von zwei Seiten an der Arbeitsfläche jedes Elements angenietet sind, befestigt. Für größere Steifigkeit der Konstruktion sorgt im oberen und unteren Teil jedes Elements ein Aluminiumring (4) mit derselben Krümmung wie die der Arbeitsfläche, Größe 120,0 x 15,0 cm. Die Elemente können miteinander durch Stöße verbunden und befestigt werden, sodass sie einen Zylinder bilden (Fig. 6), der im Bereich des Eingangs geöffnet ist (aus 4 oder 6 Elementen), aber auch eine links- oder rechtsgedrehte spiralförmige Konstruktion aus 8-10 Elementen (Fig. 7, 8) mit einem Arbeitsraum in Form eines nichtgeschlossenen Zylinders mit Bodenelement (6).

### B) Einfluss der Vorrichtung 1 (hypomagnetische Kammer) sowie der Vorrichtung 2 (Metallschirm) auf die Oberfläche zweier Modifikationen hochdispersen Siliziumdioxids, nämlich Aerosil 200 bzw. Aerosil 380:

Zwei hochdisperse Kieselsäurepräparate (mit der Handelsbezeichnung Aerosil 200 (mittlere Oberfläche nach BET = 200 m² . g⁻¹) sowie Aerosil 380 (mittlere Oberfläche nach BET = 380 m². g⁻¹)) werden für 72 Stunden in die hypomagnetische Kammer bzw. in den Metallschirm eingebracht. Eine entsprechende Vergleichsprobe der selben Charge wird unter Normalbedingungen außerhalb der beiden Vorrichtungen gelagert. Anschließend werden die zu messenden Proben, ebenso wie die Vergleichsprobe, bei 50°C für 20 Stunden im Hochvakuum entgast (bzw. getrocknet) und mittels BET-Methode deren Oberfläche bestimmt. Dabei werden die einzelnen Proben mit fortlaufenden Nummern wie folgt bezeichnet:
Probe Nr. 1 = Aerosil 200 Kontrollprobe
Probe Nr. 2 = Aerosil 200 nach hypomagnetischer Kammer
Probe Nr. 3 = Aerosil 200 nach Metallschirm
Probe Nr. 4 = Aerosil 380 Kontrollprobe
Probe Nr. 5 = Aerosil 380 nach hypomagnetischer Kammer
Probe Nr. 6 = Aerosil 380 nach Metallschirm

Die (jeweils dreifach durchgeführten) Bestimmungen der Siliziumdioxidoberflächen nach BET sind in folgenden Tabelle (sowie in beiliegenden Einzelergebnissen) angeführt:

| Probe Nr. | Einwaage (g) | Auswaage (nach Ausgasen bei 50°C) | % Massenverlust | BET (m²/g) (bez. auf die eingewogene Probe) | BET (m²/g) (bez. auf die ausgegaste Probe) |
|---|---|---|---|---|---|
| 1 | 0,1210 | 0,1024 | 15,4 | 197 | 233 |
| 2 | 0,1638 | 0,1452 | 11,4 | 198 | 223 |
| 3 | 0,2781 | 0,2658 | 4,4 | 199 | 208 |
| 4 | 0,1923 | 0,1671 | 13,1 | 335 | 386 |
| 4-2 | 0,1828 | 0,1588 | 13,1 | 329 | 379 |
| 5 | 0,3048 | 0,2804 | 8,0 | 315 | 342 |
| 6 | 0,1902 | 0,1713 | 9,9 | 302 | 335 |

Die Messergebnisse zeigen (von Proben Nr. 1 bis Proben Nr. 3 bzw. von Proben Nr. 4 bis Proben Nr. 6) eine Verkleinerung der Oberflächen der eingesetzten Siliziumdioxidproben nach Einbringung der Proben in die hypomagnetische Kammer bzw. in den Metallschirm. Die Untersuchungsergebnisse zeigen zudem eine stärkere Verkleinerung der Oberfläche nach Einbringung in den Metallschirm im Vergleich zu jenen Proben, die in die hypomagnetische Kammer eingebracht worden waren.

Die Messergebnisse zeigen, dass es möglich ist, ohne mechanische Beeinflussung die Oberfläche von Siliziumverbindungen zu verändern, ein Effekt, der offensichtlich auf eine Veränderung der supermolekularen Verknüpfung einzelner Siliziumdioxidmoleküle, verursacht durch eine Veränderung des elektromagnetischen Umfeldes, hervorgerufen wird. Damit ist es möglich, durch Veränderung der supermolekularen Struktur (messbar durch die Oberflächenveränderungen nach der BET-Methode) von Siliziumverbindungen anorganischer und organischer (pflanzlicher und fossiler) Herkunft und anderen Halbleiter-Elementen die biophysikalischen Eigenschaften dieser so veränderten Substanzen zu modifizieren und zu standardisieren.

## Patentansprüche

1. Verfahren zur Verringerung der Oberfläche von Siliziumdioxid, **dadurch gekennzeichnet, dass** Siliziumdioxid in eine elektromagnetische Abschirmungsvorrichtung, ausgewählt aus einer Aluminium/Magnesium-Metallschirmvorrichtung und einer hypomagnetischen Kammer aus Permalloystahl, eingebracht wird und für eine Zeitdauer von mindestens 3, vorzugsweise von mindestens 6 Stunden, inkubiert wird.

2. Verfahren nach Anspruch 1, **dadurch gekennzeichnet, dass** Siliziumdioxid in eine hypomagnetische Kammer eingebracht wird.

3. Verfahren nach Anspruch 1, **dadurch gekennzeichnet, dass** Siliziumdioxid in eine Metallschirmvorrichtung eingebracht wird.

4. Verfahren nach einem der Ansprüche 1 bis 3, **dadurch gekennzeichnet, dass** die Inkubation während einer Zeitdauer von 12 bis 200 Stunden, vorzugsweise 24 bis 100 Stunden, insbesondere während etwa 72 Stunden, durchgeführt wird.

## Claims

1. A method for reducing the surface area of silicon dioxide, **characterised in that** silicon dioxide is introduced into an electromagnetic shielding device selected from an aluminium/magnesium metal shielding device and a hypomagnetic chamber of Permalloy steel, and is incubated for a period of at least 3 hours, preferably at least 6 hours.

2. A method according to claim 1, **characterised in that** silicon dioxide is introduced into a hypomagnetic chamber.

3. A method according to claim 1, **characterised in that** silicon dioxide is introduced into a metal shielding device.

4. A method according to any one of claims 1 to 3, **characterised in that** incubation is carried out over a period of 12 to 200 hours, preferably during 24 to 100 hours, in particular approximately 72 hours.

## Revendications

1. Procédé pour réduire la surface d'un dioxyde de silicium, **caractérisé en ce que** le dioxyde de silicium est introduit dans un dispositif de blindage électromagnétique, choisi parmi un dispositif de blindage métallique en aluminium/magnésium et une chambre hypomagnétique en acier de Permalloy et **en ce qu'**il est incubé pendant une durée d'au moins 3 heures, de préférence d'au moins 6 heures.

2. Procédé selon la revendication 1, **caractérisé en ce que** le dioxyde de silicium est introduit dans une chambre hypomagnétique.

3. Procédé selon la revendication 1, **caractérisé en ce que** le dioxyde de silicium est introduit dans un dispositif de blindage métallique en aluminium/magnésium.

4. Procédé selon l'une quelconque des revendications 1 à 3, **caractérisé en ce que** l'incubation est réalisée pendant une durée de 12 à 200 heures, de préférence de 24 à 100 heures, de manière particulièrement préférée pendant environ 72 heures.
